# EUROPÄISCHE PATENTSCHRIFT

(11) **EP 3 517 179 B1**
(45) Veröffentlichungstag und Bekanntmachung des Hinweises auf die Patenterteilung: **09.09.2020**
(21) Anmeldenummer: 18153628.5
(22) Anmeldetag: 26.01.2018
(51) Int. Cl.: A62B 33/00

(54) **LAWINENAIRBAGSYSTEM, TRAGEINRICHTUNG MIT EINEM LAWINENAIRBAGSYSTEM UND VERFAHREN ZUM BETREIBEN EINES LAWINENAIRBAGSYSTEMS**
AVALANCHE AIRBAG SYSTEM, SUPPORT DEVICE WITH AN AVALANCHE AIRBAG SYSTEM AND METHOD FOR OPERATING AN AVALANCHE AIRBAG SYSTEM
SYSTÈME DE COUSSIN GONFLABLE D'AVALANCHE, DISPOSITIF PORTEUR DOTÉ D'UN SYSTÈME DE COUSSIN GONFLABLE D'AVALANCHE ET PROCÉDÉ DE FONCTIONNEMENT D'UN SYSTÈME DE COUSSIN GONFLABLE D'AVALANCHE

(43) Veröffentlichungstag der Anmeldung: 31.07.2019
(73) Patentinhaber: Ortovox Sportartikel GmbH, 82024 Taufkirchen (DE)
(72) Erfinder: Bier, Christian, 83714 Miesbach (DE)
(74) Vertreter: Hofstetter, Schurack & Partner

(56) Entgegenhaltungen:
- EP-A1- 3 202 462
- US-A1- 2013 149 924

## Beschreibung

Die Erfindung betrifft ein Lawinenairbagsystem, welches einen Airbag und eine Befüllvorrichtung zum Einbringen von Umgebungsluft in den Airbag umfasst. Die Befüllvorrichtung umfasst ein Gebläse mit einem Elektromotor, einen ersten elektrischen Energiespeicher und einen zweiten elektrischen Energiespeicher, welcher als Kondensator ausgebildet ist. Des Weiteren umfasst die Befüllvorrichtung eine Steuerungseinrichtung zum Ansteuern des Elektromotors. Die Erfindung betrifft auch eine Trageinrichtung mit einem solchen Lawinenairbagsystem und ein Verfahren zum Betreiben eines solchen Lawinenairbagsystems.

Derzeit sind Lawinenairbagsysteme verbreitet, bei welchen eine mit unter Druck stehendem Gas gefüllte Kartusche zum Befüllen beziehungsweise Aufblasen des Airbags verwendet wird. Bei einem durch einen Nutzer des Lawinenairbagsystems bewirkten Auslösen des Lawinenairbagsystems wird ein Verschluss der Kartusche durchstoßen, und das in der Kartusche enthaltene Gas strömt in den Airbag ein. Hierbei kann über eine Venturi-Einrichtung, durch welche das Gas strömt, zusätzlich Umgebungsluft angesaugt und zusammen mit dem Gas aus der Kartusche in den Airbag eingebracht werden.

Als nachteilig ist bei derartigen Lawinenairbagsystemen der Umstand anzusehen, dass eine Mehrfachauslösung nicht möglich ist. Des Weiteren erlauben Lufttransportvorschriften in einigen Ländern keine Mitnahme von gefüllten Kartuschen. Es ist auch nicht auszuschließen, dass in Zukunft auch für noch mehr Länder strengere Transportvorschriften im Hinblick auf das Mitführen von Gaskartuschen gelten werden. Denn das Gas in der Kartusche derzeit erhältlicher Lawinenairbagsysteme steht unter einem Druck von bis zu 300 bar.

Als alternative Lawinenairbagsysteme sind daher seit einigen Jahren auch solche mit einer elektrisch betriebenen Befüllvorrichtung erhältlich. Hierbei sorgt ein sehr leistungsfähiges Gebläse mit einem Elektromotor dafür, dass der Airbag innerhalb einer Zeitspanne von 5 Sekunden nach der Auslösung mit Umgebungsluft gefüllt wird. Der Elektromotor wird von einem elektrischen Energiespeicher der Befüllvorrichtung mit Strom versorgt.

Herkömmliche elektrische Energiespeicher in Form von Lithium-Ionen-Akkumulatoren verlieren jedoch bei Temperaturen von weniger als -10 Grad Celsius signifikant an Leistung, und bei Temperaturen von unter -20 Grad Celsius ist eine Funktionstüchtigkeit derartiger elektrischer Energiespeicher kaum noch gegeben.

Aufgrund der hohen Anforderungen an die Auslösesicherheit eines Lawinenairbagsystems, welche auch bei Temperaturen von bis zu -30 Grad Celsius gewährleistet werden muss, werden als Lithium-Ionen-Akkumulatoren ausgebildete Energiespeicher daher sehr viel größer dimensioniert, als dies bei gemäßigten Temperaturen erforderlich wäre. Dies führt dazu, dass das Lawinenairbagsystem sehr schwer wird aber dennoch bei sehr tiefen Temperaturen anfällig für Probleme bleibt. Zusätzlich ist das Vorsehen von großen Lithium-Ionen-Akkumulatoren sehr kostenintensiv.

Die EP 3 202 462 A1 beschreibt ein Lawinenairbagsystem mit einer elektrisch betriebenen Aufblasvorrichtung, wobei zum Versorgen eines Gebläses der Aufblasvorrichtung Kondensatoren in Form von Superkondensatoren oder Ultrakondensatoren zum Einsatz kommen. Zum Wiederaufladen der Kondensatoren kann die in der EP 3 202 462 A1 beschriebene Aufblasvorrichtung eine Batterie umfassen. Das Aufblasen des Airbags wird jedoch immer und ausschließlich mit der elektrischen Energie aus den Kondensatoren bewerkstelligt.

Als nachteilig ist hierbei der Umstand anzusehen, dass Kondensatoren eine vergleichsweise rasche Selbstentladung zeigen. Ist das Lawinenairbagsystem der EP 3 202 462 A1 somit längere Zeit nicht in Gebrauch, so kann es kritisch werden, mit der in den Kondensatoren verbleibenden elektrischen Energie das Befüllen des Airbags sicherzustellen.

Aufgabe der vorliegenden Erfindung ist es daher, ein Lawinenairbagsystem der eingangs genannten Art im Hinblick auf die Auslösesicherheit zu verbessern, eine Trageinrichtung mit einem solchen Lawinenairbagsystem bereitzustellen, und ein entsprechend verbessertes Verfahren zu schaffen.

Diese Aufgabe wird durch ein Lawinenairbagsystem mit den Merkmalen des Patentanspruchs 1, eine Trageinrichtung mit den Merkmalen des Patentanspruchs 12 und ein Verfahren mit den Merkmalen des Patentanspruchs 13 gelöst. Vorteilhafte Ausgestaltungen mit zweckmäßigen Weiterbildungen der Erfindung sind in den abhängigen Patentansprüchen angegeben.

Das erfindungsgemäße Lawinenairbagsystem umfasst wenigstens einen Airbag und eine Befüllvorrichtung zum Einbringen von Umgebungsluft in den Airbag. Die Befüllvorrichtung umfasst wenigstens ein Gebläse mit einem Elektromotor, einen ersten elektrischen Energiespeicher und einen zweiten elektrischen Energiespeicher, wobei der zweite elektrische Energiespeicher als Kondensator ausgebildet ist. Eine Steuerungseinrichtung der Befüllvorrichtung dient dem Ansteuern des Elektromotors. Hierbei ist die Steuerungseinrichtung dazu ausgebildet, ein Aktivieren eines Bereitschaftsmodus der Befüllvorrichtung zu erfassen und in Abhängigkeit von dem Aktivieren des Bereitschaftsmodus ein Laden des Kondensators mit aus dem ersten Energiespeicher stammender elektrischer Energie zu bewirken. Die Steuerungseinrichtung sorgt also dafür, dass der Kondensator erst unmittelbar dann geladen wird, wenn ein Nutzer des Lawinenairbagsystems den Bereitschaftsmodus der Befüllvorrichtung aktiviert. So wird sichergestellt, dass während einer Nicht-Benutzung des Lawinenairbagsystems möglichst wenig elektrische Energie verloren geht.

Dem liegt die Erkenntnis zugrunde, dass Kondensatoren aufgrund einer Selbstentladung kontinuierlich elektrische Energie verlieren. Der Verlust durch diese Selbstentladung kann bei mindestens 5 Prozent innerhalb von 24 Stunden liegen. Dies bedeutet etwa bei dem Lawinenairbagsystem der EP 3 202 462 A1, dass nach einer Woche, in welcher das Lawinenairbagsystem beziehungsweise ein mit dem Lawinenairbagsystem ausgestatteter Rucksack nicht in Gebrauch ist, bereits über ein Drittel der elektrischen Energie des Kondensators verloren gegangen ist. Um sicherzustellen, dass der Kondensator vollständig geladen ist, müsste der Nutzer somit nach einer gewissen Zeit der Nicht-Benutzung des Lawinenairbagsystems den Kondensator nachladen. Dies ist für den Nutzer oder Anwender lästig, und es kann zudem auch für die Sicherheit kritisch sein, wenn der Nutzer es übersieht, das Lawinenairbagsystem vor einer Tour nochmals zu laden.

Vorliegend sorgt jedoch die Steuerungseinrichtung dafür, dass immer dann, wenn die Befüllvorrichtung des Lawinenairbagsystems in den Bereitschaftsmodus oder Standby-Modus versetzt wird, der Kondensator mit aus dem ersten elektrischen Energiespeicher stammender Energie geladen wird. Dadurch braucht nicht der Nutzer sich um das Nachladen des Kondensators zu kümmern, und dennoch steht Leistung, insbesondere die volle Leistung, des Kondensators nach dem Aktivieren des Bereitschaftsmodus der Befüllvorrichtung und dem dadurch ausgelösten Laden des Kondensators zur Verfügung. Das Lawinenairbagsystem bleibt somit auch ohne ein durch den Nutzer vorgenommenes Nachladen des Kondensators über einen besonders langen Zeitraum hinweg einsatzfähig. Dies erhöht die Auslösesicherheit des Lawinenairbagsystems, und es ist zudem für den Nutzer des Lawinenairbagsystems besonders komfortabel und aufwandsarm.

Des Weiteren kann der erste Energiespeicher dennoch leichter und kleiner dimensioniert werden, als dies beim Vorsehen einer Energieversorgung der Fall wäre, welche nicht als den zweiten elektrischen Energiespeicher den Kondensator aufweist. Denn eine derartige Energieversorgung wird üblicherweise sehr groß dimensioniert, um auch bei Temperaturen von bis zu -30 Grad Celsius noch ausreichend elektrische Energie für das Aufblasen des Airbags bereitzustellen. Durch das Vorsehen des Kondensators funktioniert das vorstehend beschriebene Lawinenairbagsystem jedoch auch bei sehr niedrigen Temperaturen ohne Leistungsabfall. Denn der Kondensator ist dazu in der Lage, eine große elektrische Energiemenge kurzfristig und insbesondere weitgehend unabhängig von der herrschenden Umgebungstemperatur bereitzustellen. Diese Temperaturunempfindlichkeit des Kondensators verglichen mit dem ersten elektrischen Energiespeicher macht man sich bei dem vorliegend beschriebenen Lawinenairbagsystem zunutze.

Denn in dem Kondensator kann die elektrische Energie weitgehend unabhängig von der vorliegenden Umgebungstemperatur sowohl gespeichert und auch wieder von dem Kondensator abgegeben werden. Und durch das Nachliefern der elektrischen Energie, welche aufgrund der Selbstentladung des Kondensators verloren geht unmittelbar nach dem Aktivieren des Bereitschaftsmodus der Befüllvorrichtung kann der Kondensator seine Funktion des Bereitstellens von elektrischer Energie für den Elektromotor des Gebläses besonders weitgehend erfüllen.

Insbesondere bei dem unter Umständen lebensrettenden Lawinenairbagsystem ist dies von großem Vorteil. Denn es wird der Kondensator in Kombination mit dem ersten elektrischen Energiespeicher zum Versorgen des Elektromotors des Gebläses eingesetzt, wobei es sich bei dem ersten elektrischen Energiespeicher um einen von einem Kondensator verschiedenen Energiespeicher handelt. Durch die Nutzung sowohl des ersten elektrischen Energiespeichers als auch des Kondensators ist die Befüllvorrichtung des Lawinenairbagsystems dennoch besonders leicht. Zudem braucht eine geringere Nennkapazität der elektrischen Energiespeicher der Befüllvorrichtung vorgesehen zu werden, als dies bei einer Nutzung lediglich von Batterien oder Akkumulatoren als einzigem elektrischen Energiespeicher der Fall wäre, wenn zugleich auch bei sehr tiefen Umgebungstemperaturen das Auslösen des Airbags sichergestellt werden soll.

Durch das Vorsehen sowohl des ersten elektrischen Energiespeichers als auch des Kondensators wird also insgesamt eine höhere Redundanz im Hinblick auf das Bereitstellen der elektrischen Energie für den Elektromotor geschaffen, und damit eine höhere Sicherheit für den Anwender oder Nutzer des Lawinenairbagsystems erreicht. Hierbei ist der erste elektrische Energiespeicher dazu ausgelegt, die in diesem gespeicherte elektrische Energie über eine im Vergleich zu dem Kondensator längere Zeitspanne hinweg abzugeben, wohingegen der Kondensator die elektrische Energie innerhalb sehr kurzer Zeit abzugeben in der Lage ist. Der Kondensator dient somit als über eine kurze Zeitspanne hinweg nutzbarer elektrischer Energiespeicher und der erste Energiespeicher als über eine lange Zeitspanne hinweg nutzbarer elektrischer Energiespeicher. Diese Kombination ist für das Versorgen des Elektromotors des Gebläses zum Aufblasen des Airbags mit Umgebungsluft besonders vorteilhaft. Denn es kann die Leistungsanforderung sowohl des Elektromotors als auch etwa der Steuerungseinrichtung besonders zielgerichtet und effizient abgedeckt werden.

Dadurch, dass der erste elektrische Energiespeicher das Laden beziehungsweise Nachladen des Kondensators bedingt durch das Aktivieren des Bereitschaftsmodus durchführt, kann insbesondere sichergestellt werden, dass auch bei einem Nichtgebrauch des Lawinenairbagsystems über einen Zeitraum von bis zu vier Wochen hinweg der Kondensator dann einsatzfähig ist, wenn das Lawinenairbagsystems genutzt werden soll und somit von dem Nutzer in den Bereitschaftsmodus versetzt wird.

Das Lawinenairbagsystem umfasst eine Betätigungseinrichtung, mittels welcher die Befüllvorrichtung in einen ausgelösten Zustand verbracht werden kann, in welchem die Befüllvorrichtung Umgebungsluft in den Airbag einbringt. Die Betätigungseinrichtung kann einen Griff umfassen, an welchem der Nutzer des Lawinenairbagsystems zieht, um das Befüllen beziehungsweise Aufblasen des Airbags zu erreichen. Insbesondere kann eine Schalteinrichtung mittels der Betätigungseinrichtung geschaltet werden, wobei die Steuerungseinrichtung ein Signal empfängt, dass die Schalteinrichtung geschaltet wurde. Daraufhin bewirkt die Steuerungseinrichtung durch Ansteuern des Elektromotors, dass der Airbag aufgeblasen wird.

Dann, wenn sich die Befüllvorrichtung in dem Bereitschaftsmodus befindet, bewirkt ein Betätigen der Betätigungseinrichtung, dass das Gebläse den Airbag mit Umgebungsluft befüllt.

Die Befüllvorrichtung kann etwa durch Betätigen eines Schalters in den Bereitschaftsmodus versetzt werden, welcher beispielsweise an einem Griff oder einer derartigen Betätigungseinrichtung zum Auslösen des Lawinenairbagsystems angeordnet sein kann. Wenn das Lawinenairbagsystem in einer Trageinrichtung wie einem Rucksack angeordnet ist, kann ein solcher Schalter zum Einschalten der Befüllvorrichtung und somit zum Aktivieren des Bereitschaftsmodus auch an einer anderen geeigneten Stelle in dem Rucksack oder an dem Rucksack angeordnet sein.

Vorzugsweise ist eine Nennkapazität des ersten Energiespeichers derart bemessen, dass auch nach dem Laden des Kondensators durch Nutzung der elektrischen Energie des ersten Energiespeichers der Airbag, insbesondere bei einer Umgebungstemperatur von bis zu -30 Grad Celsius, mindestens einmal befüllt werden kann. Dementsprechend ist eine einmalige Notauslösung auch mittels des ersten Energiespeichers alleine sichergestellt. Dies ist der Sicherheit des Lawinenairbagsystems zuträglich.

Vorzugsweise ist die Steuerungseinrichtung dazu ausgebildet, in Abhängigkeit von dem Aktivieren des Bereitschaftsmodus das Einbringen zumindest einer Ladungsmenge aus dem ersten Energiespeicher in den Kondensator zu bewirken, mittels welcher der Airbag mindestens einmal befüllt werden kann. Mit anderen Worten wird also bevorzugt die für mindestens eine Auslösung erforderliche Energie dann in den Kondensator verschoben, wenn die Befüllvorrichtung in den Bereitschaftsmodus versetzt wird. So kann sichergestellt werden, dass während der Nutzung des Lawinenairbagsystems allein mit der in dem Kondensator gespeicherten elektrischen Energie zumindest eine Auslösung des Airbags möglich ist. Auch dies erhöht die Auslösesicherheit des Lawinenairbagsystems.

Vorzugsweise ist die Steuerungseinrichtung dazu ausgebildet, in Abhängigkeit von einem Eingeschaltet-Werden des Elektromotors das Beaufschlagen des Elektromotors mit aus beiden Energiespeichern stammender elektrischer Energie zu bewirken. Dem liegt die Erkenntnis zugrunde, dass insbesondere unmittelbar nach dem Einschalten des Elektromotors von den Energiespeichern eine sehr große Leistung bereitzustellen ist. Denn gerade zu Beginn des Befüllvorgangs ist eine entsprechend hohe Leistung des Gebläses erforderlich, um den Airbag aus einer diesen umschließenden Hülle heraus zu befördern, welche bei Anordnung des Lawinenairbagsystems in einer Trageinrichtung wie einem Rucksack auch als Airbagtasche bezeichnet wird. Es muss nämlich von dem Gebläse die Energie aufgebracht werden, um diese Airbagtasche zu öffnen und den Airbag aus der Airbagtasche auszubringen. Hierfür ist es sinnvoll, wenn der Elektromotor aus beiden elektrischen Energiespeichern stammende elektrische Energie bezieht.

Des Weiteren ist beim Befüllen des Airbags sicherzustellen, dass dieser zunächst mit maximaler Leistung so weit aufgeblasen wird, dass der Airbag ein bestimmtes von der Umgebungsluft eingenommenes Volumen aufweist. Auch hier ist die Nutzung der elektrischen Energie beider Energiespeicher zum Versorgen des Elektromotors vorteilhaft. Darüber hinaus ist gerade beim Anlaufen des Gebläses von dem Elektromotor eine besonders hohe Leistung bereitzustellen.

Und es kann steuerungstechnisch beziehungsweise regelungstechnisch besonders einfach umgesetzt werden, dass die Steuerungseinrichtung immer dann das Beaufschlagen des Elektromotors mit aus beiden Energiespeichern stammender elektrischer Energie bewirkt, wenn der Elektromotor eingeschaltet wird. Folglich lässt sich der Airbag beziehungsweise Lawinenairbag verbessert befüllen. Das Einschalten des Elektromotors kann insbesondere durch Betätigen einer Betätigungseinrichtung oder Auslöseeinrichtung des Lawinenairbagsystems bewirkt werden. So kann etwa infolge eines Ziehens an einem Auslösegriff die Steuerungseinrichtung ein Signal empfangen und daraufhin den Elektromotor einschalten.

Vorzugsweise ist die Steuerungseinrichtung zusätzlich oder alternativ dazu ausgebildet, in Abhängigkeit vom Überschreiten eines vorbestimmten Schwellenwerts einer von dem Elektromotor beim Befüllen des Airbags abzugebenden Leistung das Beaufschlagen des Elektromotors mit aus beiden Energiespeichern stammender elektrischer Energie zu bewirken. Es kann also die von dem Elektromotor bereitzustellende Soll-Leistung bei der Entscheidung durch die Steuerungseinrichtung berücksichtigt werden, ob beide Energiespeicher den Elektromotor mit elektrischer Energie versorgen sollen oder nur einer der Energiespeicher. Auf diese Weise können beim Befüllen des Airbags auftretende Spitzenlasten besonders gut abgedeckt werden. Des Weiteren kann so sichergestellt werden, dass bei allen Bedingungen die hohe Leistung der Energiespeicher für den Elektromotor zur Verfügung steht.

Der erste elektrische Energiespeicher kann insbesondere eine nicht wieder aufladbare Batterie und/oder einen Akkumulator umfassen. Das Ausbilden des ersten Energiespeichers als nicht wieder aufladbare Batterie hat den Vorteil, dass derartige elektrische Energiespeicher auch bei niedrigen Temperaturen leistungsfähiger sind als Akkumulatoren. Dadurch kann der erste elektrische Energiespeicher im Vergleich zur Ausbildung desselben als Akkumulator kleiner bemessen und somit leichter sein. Zudem lassen sich nicht wieder aufladbare Batterien einfach und kostengünstig austauschen, und es ist keine aufwändige Ladeeinrichtung vorzusehen, wie dies bei Akkumulatoren der Fall ist.

Wenn der erste elektrische Energiespeicher hingegen einen Akkumulator umfasst, so kann insbesondere elektrische Energie aus dem Kondensator wieder in den ersten elektrischen Energiespeicher zurück verschoben werden. Daher hat es sich als vorteilhaft gezeigt, wenn die Steuerungseinrichtung der Befüllvorrichtung dazu ausgebildet ist, ein Einbringen von elektrischer Energie aus dem Kondensator in den ersten Energiespeicher zu bewirken. So lässt sich für den Fall, dass das Lawinenairbagsystem nicht ausgelöst wurde, einem Energieverlust aufgrund der Selbstentladung des Kondensators entgegenwirken, wenn die Befüllvorrichtung wieder ausgeschaltet, der Bereitschaftsmodus also wieder deaktiviert wird.

Vorzugsweise ist vorgesehen, dass ein Wechsel des ersten Energiespeichers ohne Werkzeug möglich ist. Dies vereinfacht die Handhabung des Lawinenairbagsystems durch den Nutzer.

Vorzugsweise dient der erste Energiespeicher dem Versorgen der Steuerungseinrichtung und/oder weiterer elektronischer Komponenten mit elektrischer Energie. Dies ist insbesondere dann vorteilhaft, wenn der erste Energiespeicher als nicht wieder aufladbare Batterie oder als Akkumulator ausgebildet ist. Denn die zum Versorgen der Steuerungseinrichtung sowie weiterer elektronischer Komponenten, welche in dem Bereitschaftsmodus der Befüllvorrichtung aktiv sind, bereitzustellende Leistung ist vergleichsweise gering und insbesondere um ein Vielfaches geringer als die zum Betreiben des Elektromotors des Gebläses aufzubringende Energie. Wenn es also nicht gilt, Spitzenlasten abzudecken, sondern vielmehr die Befüllvorrichtung in dem Bereitschaftsmodus zu halten, ist es vorteilhaft, auf den etwa als nicht wieder aufladbare Batterie oder Akkumulator ausgebildeten ersten Energiespeicher zurückzugreifen. Denn dies sorgt für einen effizienten Betrieb des Lawinenairbagsystems. Zudem bleibt dann die elektrische Energie des zweiten, als Entlastungselement dienenden Energiespeichers in Form des Kondensators erhalten und steht zum Abdecken von Spitzenlasten weitgehend uneingeschränkt zur Verfügung. Die weiteren elektronischen Komponenten können insbesondere Leuchtmittel oder dergleichen Anzeigeelemente umfassen, welche den Bereitschaftsmodus der Befüllvorrichtung und/oder einen Ladungszustand der elektrischen Energiespeicher anzeigen.

Vorzugsweise ist der Kondensator als Superkondensator beziehungsweise Ultrakondensator ausgebildet. Zusätzlich oder alternativ kann der Kondensator als Lithium-Ionen-Kondensator ausgebildet sein. Mittels des als ein solcher Kondensator ausgebildeten zweiten Energiespeichers lassen sich im Betrieb des Elektromotors auftretende Spitzenlasten besonders gut abdecken. Denn der Superkondensator beziehungsweise Ultrakondensator und/oder Lithium-Ionen-Kondensator kann seine elektrische Energie besonders rasch abgeben. Dies liegt an der um ein Vielfaches größeren Leistungsdichte etwa eines Superkondensators gegenüber einem Akkumulator. Zudem ist bei dem als solcher Kondensator ausgebildeten zweiten Energiespeicher vorteilhaft, dass der Kondensator auch bei sehr tiefen und sehr hohen Temperaturen seine elektrische Energie problemlos dem Elektromotor zur Verfügung stellen kann.

Kondensatoren können produktionsbedingt Schwankungen im Hinblick auf die Kapazität und die Lebensdauer unterliegen. Werden mehrere Kondensatorelemente des Kondensators in Reihe geschaltet, um den Kondensator der Befüllvorrichtung zu bilden, so ist bevorzugt eine Überwachungseinheit vorgesehen, welche die Ladezustände dieser Kondensatorelemente überwacht und insbesondere unterschiedliche Ladezustände der Kondensatorelemente ausgleicht. So wird verhindert, dass das schwächste Kondensatorelement die Leistung des Kondensators bestimmt.

Die Steuerungseinrichtung kann also die Überwachungseinheit (beziehungsweise ein solches Managementsystem) aufweisen, mittels welcher fehlerhafte Zustände der Energiespeicher erkannt werden können, und welche insbesondere dazu ausgelegt sein kann, die Energiespeicher vor einer Überladung zu schützen und/oder einen Ladungsausgleich zwischen Energiespeichereinheiten des jeweiligen Energiespeichers durchzuführen. Dies ist etwa im Hinblick auf Kondensatorelemente des Kondensators vorteilhaft, welche elektrisch in Reihe geschaltet sind.

Vorzugsweise ist der Kondensator auf einer Leiterplatte angeordnet und mittels einer Vergussmasse in seiner Lage fixiert. Insbesondere kann auch die Platine oder Leiterplatte vergossen und/oder lackiert sein. Des Weiteren kann der Kondensator durch eine Mehrzahl von Kondensatorelementen gebildet sein, welche elektrisch in Reihe geschaltet sind. Durch die damit einhergehende Auslegung auf eine höhere Spannung kann der Kondensator besonders viel elektrische Energie bereitstellen.

Durch das Vergießen der Kondensatorelemente des Kondensators und/oder weiterer Komponenten auf der Leiterplatte kann sichergestellt werden, dass der Kondensator ausreichend vibrationsfest und korrosionsfest ist und so den beim Einsatz des Lawinenairbagsystems auftretenden Beanspruchungen gut standhält.

Zusätzlich können zum Erreichen einer hohen Vibrationsfestigkeit vibrationsresistente Steckverbinder zum Einsatz kommen, eine robuste Mechanik, eine Fixierung von kritischen Komponenten, insbesondere durch Gussgehäuse und/oder einen Verguss dieser Komponenten, und dergleichen.

Für die Vibrationsfestigkeit ist es zudem vorteilhaft, wenn die Kondensatorelemente in einem flachen Gehäuse liegend untergebracht sind. So kann sichergestellt werden, dass eine Höhe des Gehäuses beispielsweise bei etwa 45 Millimetern liegt. Durch Verwendung von derartigen, flachen Bauteilen sowie den vibrationsresistenten Steckverbindern, eine geeignete Auslegung der Leiterplatte, der robusten Mechanik und insbesondere der Fixierung kritischer Komponenten wie etwa des Kondensators wird bevorzugt die sehr hohe Vibrationsfestigkeit erreicht. Hierbei können spezielle Gussgehäuse vorgesehen sein, und vorzugsweise ist insbesondere der Kondensator mittels der Vergussmasse in seiner Lage fixiert. Auch die Leiterplatte kann vergossen und/oder lackiert sein, um die Vibrationsfestigkeit von empfindlichen Komponenten der Befüllvorrichtung zu erhöhen.

Den hohen Anforderungen an die Vibrationsfestigkeit, wie sie insbesondere beim Transport eines das Lawinenairbagsystem aufweisenden Rucksacks oder dergleichen Trageinrichtung in einem Fahrzeug und/oder einem Helikopter auftreten, kann so begegnet werden.

Eine statische Aufladung von Komponenten des Lawinenairbagsystems beziehungsweise der Befüllvorrichtung, wie sie etwa bei einem Transport des Lawinenairbagsystems in einem Helikopter aufgrund der Rotation der Rotorblätter des Helikopters zu befürchten ist, kann besonders weitgehend unterbunden werden, indem Komponenten wie etwa der Elektromotor, die Steuerungseinrichtung sowie weitere Elektronikbauteile, Tasten beziehungsweise Schalter und dergleichen miteinander verbunden sind und auf dem gleichen Massepotential liegen.

Des Weiteren sind die Elektronikkomponenten der Befüllvorrichtung, insbesondere der Steuerungseinrichtung, wie etwa Mikrochips, integrierte Schaltkreise, Halbleiter und dergleichen vorzugsweise für einen sehr breiten Arbeitstemperaturbereich ausgelegt, welcher insbesondere von -45 Grad Celsius bis über 100 Grad Celsius Umgebungstemperatur reichen kann.

Vorzugsweise ist ein Gehäuse der Befüllvorrichtung, in welchem die elektrischen Energiespeicher untergebracht sind, nach der Schutzart IP65 ausgeführt, sodass das Gehäuse im Hinblick auf das Eindringen von Fremdkörpern staubdicht ist und gegen Strahlwasser geschützt ist.

Vorzugsweise weist das Lawinenairbagsystem eine mittels der Steuerungseinrichtung ansteuerbare Warneinrichtung auf, welche dazu ausgebildet ist, nach Ablauf einer vorbestimmten Zeitspanne einen Nutzer des Lawinenairbagsystems zu einem Nachladen zumindest eines der Energiespeicher und/oder zu einem Ersetzen zumindest eines der Energiespeicher aufzufordern. Beispielsweise kann nach etwa 24 Stunden die Warneinrichtung den Nutzer auffordern, den Kondensator nachzuladen. Auch dies erhöht die Auslösesicherheit des Lawinenairbagsystems.

Insbesondere, wenn als der erste Energiespeicher eine nicht wieder aufladbare Batterie zum Einsatz kommt, kann mittels der Warneinrichtung der Nutzer dazu aufgefordert werden, die Batterie auszutauschen, beispielsweise nach einer Auslösung des Airbags oder nach einer längeren Lagerungszeit des Lawinenairbagsystems. Die Warneinrichtung kann den Nutzer auch dazu auffordern, den ersten Energiespeicher nachzuladen, wenn dieser als Akkumulator ausgebildet ist.

Insbesondere an der Betätigungseinrichtung, beispielsweise an dem Griff, kann zudem ein Indikator oder dergleichen Anzeigeelement ausgebildet sein, welcher über den Ladungszustand der Energiespeicher und/oder über einen Betriebszustand der Befüllvorrichtung Aufschluss gibt. Beispielsweise kann der Indikator anzeigen, dass die Befüllvorrichtung sich im Bereitschaftsmodus oder Standby-Modus befindet.

Die Schalteinrichtung, welche mittels der Betätigungseinrichtung geschaltet wird, um den Airbag auszulösen, ist vorzugsweise diskret, also unter Verzicht auf einen eigenen Mikrocontroller aufgebaut. Dies gilt bevorzugt ebenso für die vorzugsweise vorgesehenen Anzeigeelemente, etwa in Form von Leuchtdioden oder dergleichen, welche den Zustand der Befüllvorrichtung und/oder Ladungszustand der elektrischen Energiespeicher anzeigen können. Dadurch ist einerseits ein elektrischer Energieverbrauch dieser Einrichtungen besonders gering gehalten. Zudem ist eine besonders hohe Ausfallsicherheit gewährleistet.

Die erfindungsgemäße Trageinrichtung, welche etwa als Traggeschirr insbesondere jedoch als Rucksack ausgebildet sein kann, weist ein erfindungsgemäßes Lawinenairbagsystem auf. Hierbei ist bevorzugt der Airbag oder Lawinenairbag in einer Airbagtasche des Rucksacks untergebracht. Bei der Airbagtasche handelt es sich meist um eine von einem weiteren Staufach des Rucksacks getrennte Kammer beziehungsweise ein derartiges Behältnis, in welchem der Airbag vor einer Beschädigung geschützt aufbewahrt ist. Zudem sorgt die Airbagtasche dafür, dass der Airbag während des normalen Gebrauchs nicht aus dem Rucksack herausfällt. Zugleich sollte der Airbag so eng wie möglich gepackt sein, damit nicht unnötig wertvolles Rucksackvolumen von dem Airbag beansprucht wird. Auch dieser Zweck wird durch die Airbagtasche erfüllt. Wird jedoch das Lawinenairbagsystem ausgelöst, so bewirkt dies infolge des Aufblasens der Airbags das Öffnen der Airbagtasche, sodass der dann freigegebene Airbag weiter befüllt werden kann.

Bei dem erfindungsgemäßen Verfahren zum Betreiben eines Lawinenairbagsystems, welches wenigstens einen Airbag und eine Befüllvorrichtung umfasst, wird mittels der Befüllvorrichtung Umgebungsluft in den Airbag eingebracht. Die Befüllvorrichtung umfasst wenigstens ein Gebläse mit einem Elektromotor, einen ersten elektrischen Energiespeicher und einen zweiten, als Kondensator ausgebildeten elektrischen Energiespeicher. Des Weiteren umfasst die Befüllvorrichtung eine Steuerungseinrichtung, welche den Elektromotor ansteuert. Das Lawinenairbagsystem umfasst eine Betätigungseinrichtung, mittels welcher die Befüllvorrichtung in einen ausgelösten Zustand verbracht wird, in welchem die Befüllvorrichtung Umgebungsluft in den Airbag einbringt. Die Steuerungseinrichtung erfasst ein Aktivieren eines Bereitschaftsmodus der Befüllvorrichtung. Bedingt durch das Erfassen des Aktivierens des Bereitschaftsmodus bewirkt die Steuerungseinrichtung ein Laden des Kondensators mit aus dem ersten Energiespeicher stammender elektrischer Energie. Dann, wenn sich die Befüllvorrichtung in dem Bereitschaftsmodus befindet, bewirkt das Betätigen der Betätigungseinrichtung, dass das Gebläse den Airbag mit Umgebungsluft befüllt. Dadurch, dass die elektrische Energie somit erst dann in den Kondensator verschoben wird, wenn der Nutzer das Lawinenairbagsystem einschaltet und somit die Befüllvorrichtung in den Bereitschaftsmodus versetzt, können Verluste an elektrischer Energie des Kondensators aufgrund einer Selbstentladung besonders gering gehalten werden. Dies erhöht die Auslösesicherheit des Lawinenairbagsystems beim Betrieb desselben.

Die Vorteile und bevorzugten Ausführungsformen des erfindungsgemäßen Lawinenairbagsystems gelten auch für die erfindungsgemäße Trageinrichtung und für das erfindungsgemäße Verfahren sowie umgekehrt.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: schematisch ein Lawinenairbagsystem, bei welchem zum Versorgen eines Elektromotors eines Gebläses eine Batterie und ein Kondensator zum Einsatz kommen, wobei mittels des Gebläses ein Airbag beziehungsweise Lawinenairbag aufgeblasen wird;
- Fig. 2: eine Variante des Lawinenairbagsystems, bei welchen ein Laden des Kondensators über ein externes Stromnetz nicht vorgesehen ist, jedoch der Kondensator durch die Batterie beziehungsweise einen Akkumulator nachgeladen wird;
- Fig. 3: eine weitere Variante, bei welcher ebenfalls ein Akkumulator zum Laden des Kondensators genutzt werden kann, wobei sowohl der Kondensator als auch der Akkumulator den Elektromotor mit elektrischer Energie versorgen; und
- Fig. 4: schematisch einen Lawinenairbagrucksack mit dem Lawinenairbagsystem gemäß Fig. 1.

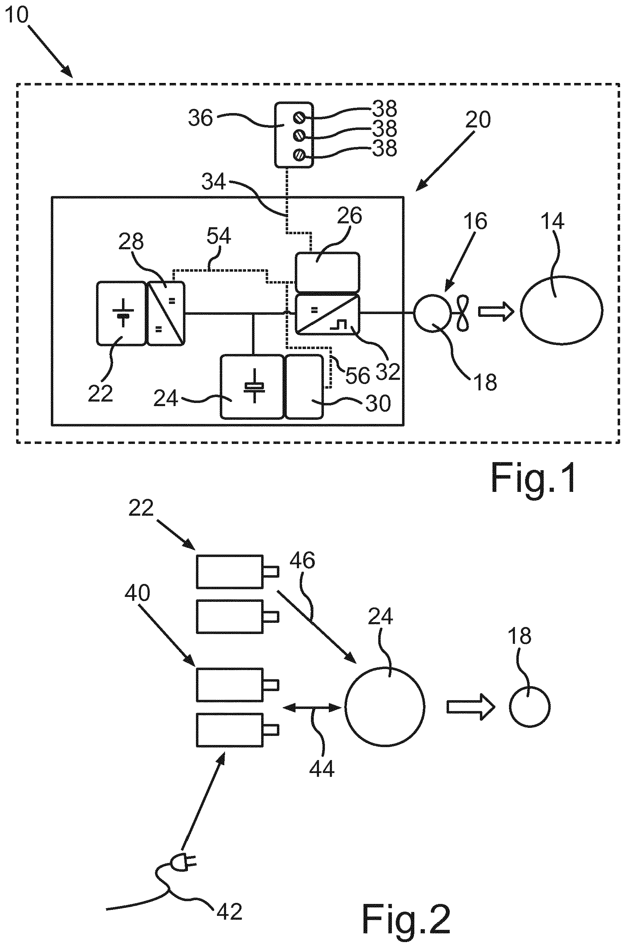

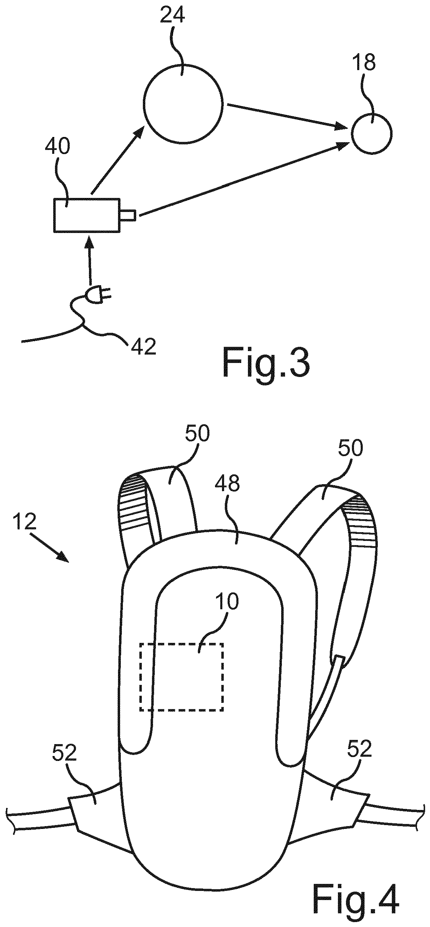

Fig. 1 zeigt schematisch ein Lawinenairbagsystem 10, wie es zur Verwendung in einer Trageinrichtung etwa in Form eines Rucksacks 12 (vergleiche Fig. 4) vorgesehen ist. Wenn das Lawinenairbagsystem 10 in dem Rucksack 12 angeordnet ist, so handelt es sich bei dem Rucksack 12 um einen Lawinenairbagrucksack. Eine Befüllvorrichtung 20 des Lawinenairbagsystems 10 ist vorliegend dazu ausgebildet, einen Airbag 14 des Lawinenairbagsystems 10 durch Betreiben eines Gebläses 16 mit Umgebungsluft zu füllen, wobei das Gebläse 16 einen Elektromotor 18 aufweist. Durch Betreiben des Gebläses 16 wird also nach einem Auslösen des Lawinenairbagsystems 10 dafür gesorgt, dass der Airbag 14 innerhalb von etwa 5 Sekunden mit Umgebungsluft befüllt wird.

Insbesondere bei den sehr tiefen Umgebungstemperaturen, bei welchen das Lawinenairbagsystem 10 zum Einsatz kommen kann, stellt es eine Herausforderung dar, die Versorgung des Elektromotors 18 mit elektrischer Energie sicherzustellen. Vorliegend umfasst daher gemäß Fig. 1 die Befüllvorrichtung 20 des Lawinenairbagsystems 10 nicht nur das Gebläse 16, sondern auch einen ersten elektrischen Energiespeicher in Form einer Batterie 22 und einen zweiten elektrischen Energiespeicher in Form eines Kondensators 24. Der Kondensator 24 kann insbesondere als Superkondensator oder Ultrakondensator insbesondere in Form eines Doppelschichtkondensators und/oder als Lithium-Ionen-Kondensator ausgebildet sein. Des Weiteren kann der Kondensator 24 eine Mehrzahl von Kondensatorelementen in Form von bevorzugt in Reihe geschalteten Superkondensatoren oder Ultrakondensatoren beziehungsweise Lithium-Ionen-Kondensatoreinheiten umfassen. Dann kann der Kondensator 24 eine höhere Spannung bereitstellen als sie ein einzelnes Kondensatorelement bereitzustellen in der Lage ist.

Eine Steuerungseinrichtung etwa in Form eines elektronischen Steuergeräts 26 steuert den Elektromotor 18 an. Insbesondere kann das Steuergerät 26 dafür sorgen, dass der Elektromotor 18 sowohl mit elektrischer Energie aus der Batterie 22 als auch mit elektrischer Energie aus dem Kondensator 24 versorgt wird, um das Aufblasen beziehungsweise das Befüllen des Airbags 14 mit Umgebungsluft zu bewirken.

Die Batterie 22 kann insbesondere durch mindestens zwei herkömmliche, nicht wieder aufladbare Batteriezellen gebildet sein (vergleiche Fig. 2), welche elektrisch leitend miteinander verbunden sein können. Insbesondere können genau zwei solcher Batteriezellen zum Bereitstellen der Batterie 22 vorgesehen sein. Mittels eines Gleichspannungswandlers 28 (vergleiche Fig. 1) kann die von der Batterie 22 bereitgestellte Spannung an die von dem Kondensator 24 breitgestellte Spannung angepasst werden.

Wenn die Batterie 22 durch mindestens zwei in Reihe geschaltete nicht wieder aufladbare Batteriezellen gebildet ist, ist vorzugsweise eine Kapazität der Batterie 22 so bemessen, dass nach einer Vollaufladung des Kondensators 24 und nach 24 Stunden im Standby-Modus mindestens zwei, vorzugsweise drei bis vier Auslösungen des Airbags 14 möglich sind.

Auch bei einer Ausbildung des ersten elektrischen Energiespeichers als Akkumulator 40 (vergleiche Fig. 2) können entsprechende, aufladbare Akkumulatorzellen in Reihe geschaltet sein und somit eine höhere Spannung bereitstellen, als dies die einzelne Akkumulatorzelle vermag.

Wie bereits erläutert, kann analog zu der Batterie 22 auch der Kondensator 24 durch eine Mehrzahl von Kondensatorelementen oder Zellen gebildet sein, welche bevorzugt ebenso wie die Batteriezellen elektrisch in Reihe geschaltet sind. Mittels einer dem Kondensator 24 zugeordneten Überwachungseinheit 30 können Spannungsunterschiede zwischen solchen Kondensatoreinheiten oder Kondensatorelementen festgestellt und ausgeglichen werden. Das Steuergerät 26 ist zum Ansteuern des Gleichspannungswandlers 28 und der Überwachungseinheit 30 ausgebildet. Entsprechende Steuerleitungen 54, 56 sind in Fig. 1 gezeigt. Zudem steuert das Steuergerät 26 einen weiteren Umrichter 32 an, welcher beispielsweise als Wechselrichter ausgebildet sein kann, und über welchen die von der Batterie 22 und dem Kondensator 24 stammende elektrische Energie dem Elektromotor 18 zugeführt wird.

Über eine Auslöseleitung 34 ist das Steuergerät 26 mit einem Auslösegriff 36 oder einer derartigen Betätigungseinrichtung verbunden. Beispielsweise kann durch Ziehen an dem Auslösegriff 36 die Befüllvorrichtung 20 in einen ausgelösten Zustand verbracht werden, in welchem die Befüllvorrichtung 20 Umgebungsluft in den Airbag 14 einbringt.

Vorliegend wird der Kondensator 24 mittels der aus dem ersten elektrischen Energiespeicher sei es in Form der Batterie 22 oder des Akkumulators 40 stammenden elektrischen Energie geladen, sobald ein Hauptschalter des Lawinenairbagsystems 10 beziehungsweise der Befüllvorrichtung 20 betätigt wird und somit die Befüllvorrichtung 20 in einen Bereitschaftsmodus oder Standby-Modus versetzt wird. Des Weiteren wird vorliegend bevorzugt sowohl um den Ladungserhalt des Kondensators 24 sicherzustellen als auch zur Versorgung des Steuergeräts 26 sowie weiterer Elektronikkomponenten der Befüllvorrichtung 20 diejenige elektrische Energie genutzt, welche aus der Batterie 22 (vergleiche Fig. 1) beziehungsweise aus der Batterie 22 und dem Akkumulator 40 (vergleiche Fig. 2) stammt.

Wenn jedoch der Elektromotor 18 des Gebläses 16 betrieben wird, um den Airbag 14 aufzublasen, also mit Umgebungsluft zu befüllen, dann unterstützt der Kondensator 24 die Batterie 22 beziehungsweise den Akkumulator 40 beim Versorgen des Elektromotors 18 mit elektrischer Energie. Auf diese Weise können Spitzenlasten des Elektromotors 18 besonders gut abgedeckt werden. Während der Belastung liefert also die Batterie 22 (beziehungsweise der Akkumulator 40) strombegrenzt über den Gleichspannungswandler 28 ihren (seinen) maximalen Strom an den Elektromotor 18, wobei der übrige elektrische Strom, mit welchem Elektromotor 18 versorgt wird, von dem Kondensator 24 bereitgestellt wird.

An dem Auslösegriff 36 können Anzeigeelemente 38 angeordnet sein, welche über den Ladezustand der Energiespeicher in Form der Batterie 22 beziehungsweise des Akkumulators 40 und des Kondensators 24 Aufschluss geben. Beispielsweise können eine gelb leuchtende, eine rot leuchtende und eine grün leuchtende Leuchtdiode als derartige Anzeigeelemente 38 vorgesehen sein. Des Weiteren können die Anzeigeelemente 38 vorzugsweise anzeigen, dass die Befüllvorrichtung 20 eingeschaltet ist und sich in dem Bereitschaftsmodus beziehungsweise Standby-Modus befindet.

Durch die Verwendung nicht wieder aufladbarer Batteriezellen zum Bereitstellen der Batterie 22 ist die Energiebereitstellung auch bei sehr niedrigen Temperaturen deutlich leistungsfähiger, als dies bei einer Verwendung des Akkumulator 40 als alleinigem ersten Energiespeicher der Fall ist. Zudem können nach dem Auslösen des Airbags 14 die Batteriezellen der Batterie 22 sehr einfach durch neue Batteriezellen ersetzt werden. Um die Sicherheit im Hinblick auf das Aufblasen des Airbags 14 weiter zu erhöhen, ist vorliegend jedoch der Kondensator 24 vorgesehen, welcher als Entlastungselement dient.

Durch ein derartiges Entlastungselement können auch Spitzenlasten im Betrieb des Elektromotors 18 abgedeckt werden. Zudem ist der Kondensator 24 nicht temperaturempfindlich, sodass mittels des Kondensators 24 auch bei sehr niedrigen Umgebungstemperaturen sehr rasch viel elektrische Energie zum Betreiben des Elektromotors 18 bereitgestellt werden kann.

Insbesondere ist vorgesehen, dass das Steuergerät 26 von der Batterie 22 elektrisch versorgt wird. Beim Betreiben des Elektromotors 18 unterstützt hingegen der Kondensator 24 die Batterie 22. Vorzugsweise ist die Batterie 22 derart bemessen, dass zumindest eine einmalige Auslösung, also zumindest ein einmaliges Befüllen des Airbags 14, mit der in der Batterie 22 gespeicherten Energiemenge auch bei Umgebungstemperaturen von bis zu -30 Grad Celsius möglich ist. Bevorzugt kann selbst dann, wenn die Batterie 22 durch zwei herkömmliche, nicht wieder aufladbare Batteriezellen gebildet ist, sichergestellt werden, dass mittels der elektrischen Energie der Batterie 22 der Kondensator 24 viermal bis fünfmal komplett geladen werden kann. Dies gilt insbesondere dann, wenn das Verschieben der elektrischen Energie aus der Batterie 22 in den Kondensator 24 bei Temperaturen von mehr als Null Grad Celsius stattfindet. Kann der Kondensator 24 viermal bis fünfmal komplett geladen werden, so sind mittels der in den Kondensator 24 verschobenen elektrischen Energie vier bis fünf Auslösungen des Lawinenairbagsystems 10 möglich, bei welchen der Airbag 14 aufgeblasen wird.

Das Steuergerät 26 kann auch dafür sorgen, dass der Elektromotor 18 lediglich mit der aus dem Kondensator 24 stammenden Energie betrieben wird. Insbesondere ist jedoch vorgesehen, dass sowohl die Batterie 22 als auch der Kondensator 24 zumindest vorübergehend elektrische Energie zum Betreiben des Elektromotors 18 bereitstellen. Dies kann von dem Steuergerät 26 beispielsweise dann bewirkt werden, wenn der Elektromotor 18 eingeschaltet wird oder wenn der Elektromotor 18 eine bestimmte Soll-Leistung bereitstellen soll, welche höher ist als ein vorbestimmter Schwellenwert der Soll-Leistung.

Fig. 2 zeigt schematisch Komponenten einer Variante des Lawinenairbagsystems 10. Bei dieser Variante ist der erste elektrische Energiespeicher sowohl durch die nicht wieder aufladbare Batterie 22 gebildet als auch durch eine wieder aufladbare Batterie, also durch den Akkumulator 40. In Fig. 2 ist schematisch ein Ladekabel 42 gezeigt, welches an ein externes Stromnetz angeschlossen werden kann, um etwa vor einer Skitour den Akkumulator 40 über das Netz zu laden. Auf Seiten der Befüllvorrichtung 20 ist zum Anschließen des Ladekabels 42 ein geeigneter Ladeanschluss, etwa in Form eines USB-Anschlusses, insbesondere eines Mini-USB-Anschlusses vorgesehen. Zudem ist in Fig. 2 durch einen Doppelpfeil 44 angedeutet, dass der Akkumulator 40 zum Kompensieren einer Selbstentladung des Kondensators 24 eingesetzt werden kann.

Dieses Kompensieren der Selbstentladung des Kondensators 24 ist ebenso mit der in Fig. 1 gezeigten Batterie 22 möglich. Um das durch den Doppelpfeil 44 veranschaulichte Zurückverschieben von elektrischer Energie aus dem Kondensator 24 in den Akkumulator 40 zu ermöglichen, ist der (in Fig. 2 nicht gezeigte) Gleichspannungswandler 28 (vergleiche Fig. 1) bevorzugt als bidirektionaler Gleichspannungswandler 28 ausgebildet.

Auch bei der in Fig. 2 gezeigten Variante können sowohl der Akkumulator 40 als auch der Kondensator 24 unabhängig voneinander den Elektromotor 18 mit elektrischer Energie versorgen. Das Steuergerät 26 kann jedoch auch bei dieser Variante das Beaufschlagen des Elektromotors 18 mit sowohl von dem Akkumulator 40 als auch mit von dem Kondensator 24 stammender elektrischer Energie bewirken.

Des Weiteren ist auch bei der in Fig. 2 gezeigten Variante vorgesehen, dass die Batterie 22 eine Selbstentladung des insbesondere als Entlastungselement dienenden Kondensators 24 kompensiert. Jedoch kann keine elektrische Energie von dem Kondensator 24 in die Batterie 22 eingebracht werden. Daher ist in Fig. 2 anstelle eines Doppelpfeils zwischen der Batterie 22 und dem Kondensator 24 lediglich ein Pfeil 46 dargestellt, welcher das Kompensieren der Selbstentladung des Kondensators 24 veranschaulicht.

Bei der in Fig. 2 gezeigten Variante des Lawinenairbagsystems 10 ist der erste Energiespeicher der Befüllvorrichtung 20 durch die Batterie 22 und den Akkumulator 40 zusammen gebildet (vergleiche Fig. 1). Bei der Variante gemäß Fig. 2 ist nicht vorgesehen, dass der Kondensator 24 über das externe Stromnetz, also durch Verwendung des Ladekabels 42 geladen oder nachgeladen wird. Vielmehr sorgen lediglich die Batterie 22 und/oder der Akkumulator 40 für das Laden oder Aufladen des Kondensators 24. Auf diese Weise braucht kein gesondertes Ladegerät für den Kondensator 24 vorgesehen und vorgehalten zu werden.

Bei den mit Bezug auf Fig. 1 und Fig. 2 beschriebenen Varianten des Lawinenairbagsystems 10 wird das Laden oder Nachladen des Kondensators 24 von dem Steuergerät 26 immer dann bewirkt, wenn die Befüllvorrichtung 20 in den Bereitschaftsmodus versetzt wird. Auf diese Weise werden Verluste an elektrischer Energie des Kondensators 24 aufgrund der Selbstentladung besonders gering gehalten. Um die Befüllvorrichtung 20 in den Bereitschaftsmodus zu versetzen, wird das Lawinenairbagsystem 10 eingeschaltet, und das Steuergerät 26 wird in der Folge mit elektrischer Energie versorgt. Wenn sich die Befüllvorrichtung 20 in dem Bereitschaftsmodus befindet, bewirkt das Betätigen des Auslösegriffs 36 (vergleiche Fig. 1), dass das Gebläse 16 den Airbag 14 mit Umgebungsluft befüllt. Das Steuergerät 26 erhält hierbei ein Signal, dass der Auslösegriff 36 betätigt wurde und steuert daraufhin den Elektromotor 18 an.

Beim Einschalten beziehungsweise Aktivieren des Bereitschaftsmodus kann das Gebläse 16 kurzzeitig betrieben werden, sodass der Nutzer des Rucksacks 12 beziehungsweise des Lawinenairbagsystems 10 eine Rückmeldung darüber erhält, dass der Bereitschaftsmodus aktiviert ist. Es kann jedoch auch auf anderem Wege eine, insbesondere haptische, Rückmeldung für diesen Zweck erzeugt werden, oder es kann dem Nutzer auf optischem und/oder akustischem Wege kommuniziert werden, dass der Bereitschaftsmodus der Befüllvorrichtung 20 aktiviert worden ist.

Des Weiteren kann vorgesehen sein, dass dann, wenn die Umgebungstemperatur unter einen vorbestimmten Schwellenwert sinkt, elektrische Energie aus der Batterie 22 beziehungsweise aus dem Akkumulator 40 (vergleiche Fig. 2) in den Kondensator 24 verschoben wird. So kann der bei niedriger Umgebungstemperatur sinkenden Leistung des Akkumulators 40 beziehungsweise der Batterie 22 Rechnung getragen werden.

In Fig. 3 sind Komponenten des Lawinenairbagsystems 10 gemäß einer weiteren Variante gezeigt, aus welcher deutlich wird, dass sowohl von dem Akkumulator 40 als auch von dem Kondensator 24 elektrische Energie für den Elektromotor 18 bereitgestellt werden kann. Auch bei der in Fig. 3 gezeigten Variante ist wie bei der Variante gemäß Fig. 2 vorgesehen, dass der Kondensator 24 nicht durch Anschließen an eine externe Stromquelle nachgeladen wird. Vielmehr erfolgt das Laden des Kondensators 24 durch den Akkumulator 40. Der Akkumulator 40 kann jedoch seinerseits über das Ladekabel 42 durch Anschließen des Ladekabels 42 an das externe Stromnetz geladen werden.

Beim Aufblasen des Airbags 14 kann zunächst der Elektromotor 18 des Gebläses 16 mit maximaler Leistung betrieben werden, um den Airbag 14 mit einem gewissen Volumen an Umgebungsluft von beispielsweise etwa 150 Litern zu befüllen. In einem weiteren Schritt kann dann der im Inneren des Airbags 14 einzustellende Druck aufgebaut werden, wobei zum Halten des Drucks insbesondere ein Ventil geschlossen werden kann. Für den Druckaufbau kann der Elektromotor 18 mit einer geringeren Leistung betrieben werden als zum Aufblasen auf das gewünschte Volumen. Des Weiteren kann vorgesehen sein, dass zu Beginn des Aufblasvorgangs der Elektromotor 18 zumindest überwiegend von dem Kondensator 24 mit elektrischer Energie versorgt wird. Es kann jedoch auch zu Beginn des Aufblasvorgangs zusätzlich die Batterieleistung der Batterie 22 beziehungsweise des Akkumulators 40 genutzt werden.

In Fig. 4 ist schematisch gezeigt, dass der Airbag 14 des Lawinenairbagsystems 10 in einer Airbagtasche 48 des Rucksacks 12 angeordnet sein kann. Bei einer solchen Airbagtasche 48 handelt es sich vorliegend um eine von einem weiteren Staufach des Rucksacks 12 getrennte Kammer beziehungsweise ein derartiges Behältnis, in welchem der Airbag 14 vor einer Beschädigung geschützt aufbewahrt ist. Zudem sorgt die Airbagtasche 48 dafür, dass der Airbag 14 während des normalen Gebrauchs nicht aus dem Rucksack 12 herausfällt. Zugleich sollte der Airbag 14 so eng wie möglich gepackt sein, damit nicht unnötig wertvolles Rucksackvolumen von dem Airbag 14 beansprucht wird. Auch dieser Zweck wird durch die Airbagtasche 48 erfüllt. Wird das Lawinenairbagsystem 10 ausgelöst, so bewirkt dies infolge des Aufblasens der Airbags 14 das Öffnen der Airbagtasche 48. Der dann freigegebene beziehungsweise freiliegende Airbag 14 kann dann weiter mittels des Gebläses 16 mit Umgebungsluft befüllt werden.

Von dem Rucksack 12 sind in Fig. 4 des Weiteren Schultergurte 50 sowie Hüftgurte 52 schematisch gezeigt. Der Auslösegriff 36 des Lawinenairbagsystems 10, welcher insbesondere aus einem der Schultergurte 50 heraustreten kann, ist in Fig. 4 der Übersichtlichkeit halber nicht dargestellt.

## Patentansprüche

1. Lawinenairbagsystem (10), welches wenigstens einen Airbag (14) und eine Befüllvorrichtung (20) zum Einbringen von Umgebungsluft in den Airbag (14) umfasst, wobei die Befüllvorrichtung (20) wenigstens ein Gebläse (16) mit einem Elektromotor (18), einen ersten elektrischen Energiespeicher (22, 40), einen zweiten, als Kondensator (24) ausgebildeten elektrischen Energiespeicher, und eine Steuerungseinrichtung (26) zum Ansteuern des Elektromotors (18) umfasst, wobei das Lawinenairbagsystem (10) eine Betätigungseinrichtung (36) umfasst, mittels welcher die Befüllvorrichtung (20) in einen ausgelösten Zustand verbringbar ist, in welchem die Befüllvorrichtung (20) Umgebungsluft in den Airbag (14) einbringt,
**dadurch gekennzeichnet, dass**
das Lawinenairbagsystem (10) einen von der Betätigungseinrichtung (36) verschiedenen Schalter umfasst, wobei durch Betätigen des Schalters die Befüllvorrichtung (20) in einen Bereitschaftsmodus versetzt werden kann, wobei die Steuerungseinrichtung (26) dazu ausgebildet ist, ein Aktivieren des Bereitschaftsmodus der Befüllvorrichtung (20) zu erfassen und in Abhängigkeit von dem Aktivieren des Bereitschaftsmodus ein Laden des Kondensators (24) mit aus dem ersten Energiespeicher (22, 40) stammender elektrischer Energie zu bewirken, wobei dann, wenn sich die Befüllvorrichtung (20) in dem Bereitschaftsmodus befindet, ein Betätigen der Betätigungseinrichtung (36) bewirkt, dass das Gebläse (16) den Airbag (14) mit Umgebungsluft befüllt.

2. Lawinenairbagsystem (10) nach Anspruch 1,
**dadurch gekennzeichnet, dass**
eine Nennkapazität des ersten Energiespeichers (22, 40) derart bemessen ist, dass auch nach dem Laden des Kondensators (24) durch Nutzung der elektrischen Energie des ersten Energiespeichers (22, 40) der Airbag (14), insbesondere bei einer Umgebungstemperatur von bis zu -30 Grad Celsius, mindestens einmal befüllt werden kann.

3. Lawinenairbagsystem (10) nach Anspruch 1 oder 2,
**dadurch gekennzeichnet, dass**
die Steuerungseinrichtung (26) dazu ausgebildet ist, in Abhängigkeit von dem Aktivieren des Bereitschaftsmodus das Einbringen zumindest einer Ladungsmenge aus dem ersten Energiespeicher (22, 40) in den Kondensator (24) zu bewirken, mittels welcher der Airbag (14) mindestens einmal befüllt werden kann.

4. Lawinenairbagsystem (10) nach einem der Ansprüche 1 bis 3,
**dadurch gekennzeichnet, dass**
die Steuerungseinrichtung (26) dazu ausgebildet ist, in Abhängigkeit von einem Eingeschaltet-Werden des Elektromotors (18) das Beaufschlagen des Elektromotors (18) mit aus beiden Energiespeichern (22, 40, 24) stammender elektrischer Energie zu bewirken.

5. Lawinenairbagsystem (10) nach einem der Ansprüche 1 bis 4,
**dadurch gekennzeichnet, dass**
die Steuerungseinrichtung (26) dazu ausgebildet ist, in Abhängigkeit vom Überschreiten eines vorbestimmten Schwellenwerts einer von dem Elektromotor (18) beim Befüllen des Airbags (14) abzugebenden Leistung das Beaufschlagen des Elektromotors (18) mit aus beiden Energiespeichern (22, 40, 24) stammender elektrischer Energie zu bewirken.

6. Lawinenairbagsystem (10) nach einem der Ansprüche 1 bis 5,
**dadurch gekennzeichnet, dass**
der erste Energiespeicher (22, 40) eine nicht wieder aufladbare Batterie und/oder einen Akkumulator umfasst.

7. Lawinenairbagsystem (10) nach einem der Ansprüche 1 bis 6,
**dadurch gekennzeichnet, dass**
die Steuerungseinrichtung (26) dazu ausgebildet ist, ein Einbringen von elektrischer Energie aus dem Kondensator (24) in den ersten Energiespeicher (40) zu bewirken.

8. Lawinenairbagsystem (10) nach einem der Ansprüche 1 bis 7,
**dadurch gekennzeichnet, dass**
der erste Energiespeicher (22, 40) dem Versorgen der Steuerungseinrichtung (26) und/oder weiterer elektronischer Komponenten mit elektrischer Energie dient.

9. Lawinenairbagsystem (10) nach einem der Ansprüche 1 bis 8,
**dadurch gekennzeichnet, dass**
der Kondensator (24) als Superkondensator und/oder als Lithium-Ionen-Kondensator ausgebildet ist.

10. Lawinenairbagsystem (10) nach einem der Ansprüche 1 bis 9,
**gekennzeichnet durch**
der Kondensator (24) auf einer Leiterplatte angeordnet und mittels einer Vergussmasse in seiner Lage fixiert ist.

11. Lawinenairbagsystem (10) nach einem der Ansprüche 1 bis 10,
**gekennzeichnet durch**
eine mittels der Steuerungseinrichtung (26) ansteuerbare Warneinrichtung, welche dazu ausgebildet ist, nach Ablauf einer vorbestimmten Zeitspanne einen Nutzer des Lawinenairbagsystems (10) zu einem Nachladen zumindest eines der Energiespeicher (24, 40) und/oder zu einem Ersetzen zumindest eines der Energiespeicher (22) aufzufordern.

12. Trageinrichtung, insbesondere Rucksack (12), mit einem Lawinenairbagsystem (10) nach einem der Ansprüche 1 bis 11.

13. Verfahren zum Betreiben eines Lawinenairbagsystems (10), welches wenigstens einen Airbag (14) und eine Befüllvorrichtung (20) umfasst, mittels welcher Umgebungsluft in den Airbag (14) eingebracht wird, wobei die Befüllvorrichtung (20) wenigstens ein Gebläse (16) mit einem Elektromotor (18), einen ersten elektrischen Energiespeicher (22, 40), einen zweiten, als Kondensator (24) ausgebildeten elektrischen Energiespeicher, und eine Steuerungseinrichtung (26) umfasst, welche den Elektromotor (18) ansteuert, wobei das Lawinenairbagsystem (10) eine Betätigungseinrichtung (36) umfasst, mittels welcher die Befüllvorrichtung (20) in einen ausgelösten Zustand verbracht wird, in welchem die Befüllvorrichtung (20) Umgebungsluft in den Airbag (14) einbringt,
**dadurch gekennzeichnet, dass**
das Lawinenairbagsystem (10) einen von der Betätigungseinrichtung (36) verschiedenen Schalter umfasst, wobei durch Betätigen des Schalters die Befüllvorrichtung (20) in einen Bereitschaftsmodus versetzt wird, wobei die Steuerungseinrichtung (26) ein Aktivieren des Bereitschaftsmodus der Befüllvorrichtung (20) erfasst und bedingt durch das Erfassen des Aktivierens des Bereitschaftsmodus ein Laden des Kondensators (24) mit aus dem ersten Energiespeicher (22, 40) stammender elektrischer Energie bewirkt, wobei dann, wenn sich die Befüllvorrichtung (20) in dem Bereitschaftsmodus befindet, das Betätigen der Betätigungseinrichtung (36) bewirkt, dass das Gebläse (16) den Airbag (14) mit Umgebungsluft befüllt.

## Claims

1. An avalanche airbag system (10) including at least one airbag (14) and a filling device (20) for introducing ambient air into the airbag (14), wherein the filling device (20) includes at least one fan (16) with an electric motor (18), a first electrical energy storage (22, 40), a second electrical energy storage formed as a capacitor (24), and a control device (26) for controlling the electric motor (18), wherein the avalanche airbag system (10) includes an actuating device (36), by means of which the filling device (20) can be brought into a triggered state, in which the filling device (20) introduces ambient air into the airbag (14),
**characterized in that**
the avalanche airbag system (10) includes a switch different from the actuating device (36), wherein the filling device (20) can be put into a standby mode by actuating the switch, wherein the control device (26) is formed to detect an activation of the standby mode of the filling device (20) and to effect charging of the capacitor (24) with electrical energy originating from the first energy storage (22, 40) depending on the activation of the standby mode, wherein, if the filling device (20) is in the standby mode, actuation of the actuating device (36) causes the fan (16) to fill the airbag (14) with ambient air.

2. The avalanche airbag system (10) according to claim 1,
**characterized in that**
a nominal capacity of the first energy storage (22, 40) is dimensioned such that also after charging of the capacitor (24) by using the electrical energy of the first energy storage (22, 40), the airbag (14) can be filled at least once, in particular at an ambient temperature of down to -30 degrees Celsius.

3. The avalanche airbag system (10) according to claim 1 or 2,
**characterized in that**
the control device (26) is formed to effect the introduction of at least one amount of charge from the first energy storage (22, 40) into the capacitor (24), by means of which the airbag (14) can be filled at least once, depending on the activation of the standby mode.

4. The avalanche airbag system (10) according to any one of claims 1 to 3,
**characterized in that**
the control device (26) is formed to effect the supply of the electric motor (18) with electrical energy originating from both energy storages (22, 40, 24) depending on the electric motor (18) being turned on.

5. The avalanche airbag system (10) according to any one of claims 1 to 4,
**characterized in that**
the control device (26) is formed to effect the supply of the electric motor (18) with electrical energy originating from both energy storages (22, 40, 24) depending on exceedance of a predetermined threshold value of a power to be output by the electric motor (18) in filling the airbag (14).

6. The avalanche airbag system (10) according to any one of claims 1 to 5,
**characterized in that**
the first energy storage (22, 40) includes a non-rechargeable battery and/or an accumulator.

7. The avalanche airbag system (10) according to any one of claims 1 to 6,
**characterized in that**
the control device (26) is formed to effect introduction of electrical energy from the capacitor (24) into the first energy storage (40).

8. The avalanche airbag system (10) according to any one of claims 1 to 7,
**characterized in that**
the first energy storage (22, 40) serves for supplying the control device (26) and/or further electronic components with electrical energy.

9. The avalanche airbag system (10) according to any one of claims 1 to 8,
**characterized in that**
the capacitor (24) is formed as a supercapacitor and/or as a lithium-ion capacitor.

10. The avalanche airbag system (10) according to any one of claims 1 to 9,
**characterized in that**
the capacitor (24) is arranged on a circuit board and fixed in its position by means of a potting compound.

11. The avalanche airbag system (10) according to any one of claims 1 to 10,
**characterized by**
a warning device controllable by means of the control device (26), which is formed to request a user of the avalanche airbag system (10) to recharge at least one of the energy storages (24, 40) and/or to replace at least one of the energy storages (22) after elapse of a predetermined period of time.

12. A carrying device, in particular backpack (12), with an avalanche airbag system (10) according to any one of claims 1 to 11.

13. A method for operating an avalanche airbag system (10), which includes at least one airbag (14) and a filling device (20), by means of which ambient air is introduced into the airbag (14), wherein the filling device (20) includes at least one fan (16) with an electric motor (18), a first electrical energy storage (22, 40), a second electrical energy storage formed as a capacitor (24), and a control device (26), which controls the electric motor (18), wherein the avalanche airbag system (10) includes an actuating device (36), by means of which the filling device (20) is brought into a triggered state, in which the filling device (20) introduces ambient air into the airbag (14),
**characterized in that**
the avalanche airbag system (10) includes a switch different from the actuating device (36), wherein the filling device (20) is put into a standby mode by actuating the switch, wherein the control device (26) detects an activation of the standby mode of the filling device (20) and effects charging of the capacitor (24) with electrical energy originating from the first energy storage (22, 40) due to the detection of the actuation of the standby mode, wherein, if the filing device (20) is in the standby mode, the actuation of the actuating device (36) causes the fan (16) to fill the airbag (14) with ambient air.

## Revendications

1. Système de coussin gonflable de sécurité en cas d'avalanche (10) comportant au moins un coussin gonflable (14) et un dispositif de remplissage (20) pour introduire de l'air ambiant dans le coussin gonflable (14), dans lequel le dispositif de remplissage (20) comporte au moins un ventilateur (16) avec un moteur électrique (18), un premier dispositif de stockage d'énergie électrique (22, 40), un second dispositif de stockage d'énergie électrique conçu comme un condensateur (24), et un dispositif de commande (26) pour la commande du moteur électrique (18), dans lequel le système de coussin gonflable de sécurité en cas d'avalanche (10) comporte un moyen d'actionnement (36) au moyen duquel le dispositif de remplissage (20) peut être mis dans un état déclenché dans lequel le dispositif de remplissage (20) introduit de l'air ambiant dans le coussin gonflable (14),
**caractérisé en ce que**
le système de coussin gonflable de sécurité en cas d'avalanche (10) comporte un commutateur différent du moyen d'actionnement (36), dans lequel en actionnant le commutateur le dispositif de remplissage (20) peut être mis dans un mode de veille, dans lequel le dispositif de commande (26) est adapté pour détecter une activation du mode de veille du dispositif de remplissage (20) et en fonction de l'activation du mode de veille pour provoquer une charge du condensateur (24) avec de l'énergie électrique provenant du premier dispositif de stockage d'énergie (22, 40), dans lequel, lorsque le dispositif de remplissage (20) est en mode de veille, un actionnement du moyen d'actionnement (36) cause le remplissage du coussin gonflable (14) avec de l'air ambiant par le ventilateur (16).

2. Système de coussin gonflable de sécurité en cas d'avalanche (10) selon la revendication 1,
**caractérisé en ce que**
une capacité nominale du premier dispositif de stockage d'énergie (22, 40) est dimensionnée de telle façon qu'aussi après la charge du condensateur (24) par utilisation de l'énergie électrique du premier dispositif de stockage d'énergie (22, 40), le coussin gonflable (14), surtout dans le cas d'une température ambiante allant jusqu'à -30 degrés Celsius, puisse être rempli au moins une fois.

3. Système de coussin gonflable de sécurité en cas d'avalanche (10) selon la revendication 1 ou 2,
**caractérisé en ce que**
le dispositif de commande (26) est adapté pour provoquer, en fonction de l'activation du mode de veille, l'introduction d'au moins une quantité de charge du premier dispositif de stockage d'énergie (22, 40) dans le condensateur (24) au moyen de laquelle le coussin gonflable (14) peut être rempli au moins une fois

4. Système de coussin gonflable de sécurité en cas d'avalanche (10) selon l'une quelconque des revendications 1 à 3,
**caractérisé en ce que**
le dispositif de commande (26) est adapté pour provoquer, en fonction d'une mise en marche du moteur électrique (18), l'alimentation du moteur électrique (18) en énergie électrique provenant des deux dispositifs de stockage d'énergie (22, 40, 24).

5. Système de coussin gonflable de sécurité en cas d'avalanche (10) selon l'une quelconque des revendications 1 à 4,
**caractérisé en ce que**
le dispositif de commande (26) est adapté pour provoquer l'alimentation du moteur électrique (18) en énergie électrique provenant des deux dispositifs de stockage d'énergie (22, 40, 24) en fonction d'un dépassement d'un seuil prédéterminé d'une puissance à produire par le moteur électrique (18) lors du remplissage du coussin gonflable (14).

6. Système de coussin gonflable de sécurité en cas d'avalanche (10) selon l'une quelconque des revendications 1 à 5,
**caractérisé en ce que**
le premier dispositif de stockage d'énergie (22, 40) comporte une batterie non-rechargeable et/ou un accumulateur.

7. Système de coussin gonflable de sécurité en cas d'avalanche (10) selon l'une quelconque des revendications 1 à 6,
**caractérisé en ce que**
le dispositif de commande (26) est adapté pour provoquer une introduction de l'énergie électrique du condensateur (24) dans le premier dispositif de stockage d'énergie (40).

8. Système de coussin gonflable de sécurité en cas d'avalanche (10) selon l'une quelconque des revendications 1 à 7,
**caractérisé en ce que**
le premier dispositif de stockage d'énergie (22, 40) sert à alimenter le dispositif de commande (26) et/ou autres composants électroniques en énergie électrique.

9. Système de coussin gonflable de sécurité en cas d'avalanche (10) selon l'une quelconque des revendications 1 à 8,
**caractérisé en ce que**
le condensateur (24) est conçu comme un supercondensateur et/ou comme un condensateur (24) lithium-ion.

10. Système de coussin gonflable de sécurité en cas d'avalanche (10) selon l'une quelconque des revendications 1 à 9,
**caractérisé en ce que**
le condensateur (24) est agencé sur une carte de circuits imprimés et est fixé dans sa position au moyen d'une masse de scellement.

11. Système de coussin gonflable de sécurité en cas d'avalanche (10) selon l'une quelconque des revendications 1 à 10,
**caractérisé par**
un dispositif d'avertissement qui peut être commandé au moyen du dispositif de commande (26), ledit dispositif d'avertissement étant adapté pour inviter un utilisateur du système de coussin gonflable de sécurité en cas d'avalanche (10) après écoulement d'une période de temps prédéterminée à recharger au moins un des dispositifs de stockage d'énergie (24, 40) et/ou à remplacer au moins un des dispositifs de stockage d'énergie (22).

12. Dispositif de transport, surtout un sac à dos (12), avec un système de coussin gonflable de sécurité en cas d'avalanche (10) selon l'une quelconque des revendications 1 à 11.

13. Procédé de fonctionnement d'un système de coussin gonflable de sécurité en cas d'avalanche (10) comportant au moins un coussin gonflable (14) et un dispositif de remplissage (20) au moyen duquel de l'air ambiant est introduit dans le coussin gonflable (14), dans lequel le dispositif de remplissage (20) comporte au moins un ventilateur (16) avec un moteur électrique (18), un premier dispositif de stockage d'énergie électrique (22, 40), un second dispositif de stockage d'énergie électrique conçu comme un condensateur (24), et un dispositif de commande (26) qui commande le moteur électrique (18), dans lequel le système de coussin gonflable de sécurité en cas d'avalanche (10) comporte un moyen d'actionnement (36) au moyen duquel le dispositif de remplissage (20) est mis dans un état déclenché dans lequel le dispositif de remplissage (20) introduit de l'air ambiant dans le coussin gonflable (14),
**caractérisé en ce que**
le système de coussin gonflable de sécurité en cas d'avalanche (10) comporte un commutateur différent du moyen d'actionnement (36) dans lequel en actionnant le commutateur le dispositif de remplissage (20) est mis dans un mode de veille, dans lequel le dispositif de commande (26) détecte une activation du mode de veille du dispositif de remplissage (20) et, en raison de la détection de l'activation du mode de veille, provoque une charge du condensateur (24) en énergie électrique provenant du premier dispositif de stockage d'énergie (22, 40), dans lequel, lorsque le dispositif de remplissage (20) est en mode de veille, l'actionnement du moyen d'actionnement (36) cause le remplissage du coussin gonflable (14) avec de l'air ambiant par le ventilateur (16).
